Europäisches Patentamt

European Patent Office

Office européen des brevets

(11) Veröffentlichungsnummer: **0 205 952**
**B1**

# (12) EUROPÄISCHE PATENTSCHRIFT

(45) Veröffentlichungstag der Patentschrift:
**11.01.89**

(51) Int. Cl.⁴: **F16C 13/02**, F16C 27/04

(21) Anmeldenummer: **86107030.8**

(22) Anmeldetag: **23.05.86**

(54) **Behandlungsmaschine mit Rotationstrommel.**

(30) Priorität: **12.06.85 CH 2483/85**

(43) Veröffentlichungstag der Anmeldung:
**30.12.86 Patentblatt 86/52**

(45) Bekanntmachung des Hinweises auf die Patenterteilung:
**11.01.89 Patentblatt 89/2**

(84) Benannte Vertragsstaaten:
**DE FR GB IT NL SE**

(56) Entgegenhaltungen:
**EP-A- 0 107 470**
**EP-A- 0 158 051**
**CH-A- 345 771**
**CH-A- 365 913**
**DE-C- 597 269**
**US-A- 1 401 536**
**US-A- 2 487 343**
**US-A- 3 097 022**
**US-A- 3 152 461**

(73) Patentinhaber: **Sulzer-Escher Wyss AG,
Hardstrasse 319, CH-8023 Zürich(CH)**

(72) Erfinder: **Christ, Alfred, Dr., Merkurstrasse 30,
CH-8032 Zürich(CH)**
Erfinder: **Spiewok, Leonhard, Zielackerstrasse 19,
CH-8304 Wallisellen(CH)**

(74) Vertreter: **Kubr, Václav, Dr. et al, c/o Sulzer - Escher
Wyss AG Patentabteilung Postfach, CH-8023 Zürich(CH)**

ACTORUM AG

**Beschreibung**

Die Erfindung betrifft eine Behandlungsmaschine mit einer Rotationstrommel, die in einem Gehäuse mit mindestens zwei axial voneinander distanzierten Lagerkränzen gelagert ist, wie sie z.B. aus US-A 3 152 461 bekannt ist.

Mit einer hier gesagten Behandlungsmaschine wird z.B. eine Waschmaschine oder eine Zentrifuge gemeint, deren Rotationstrommel in einem Gehäuse gelagert ist. Die Lagerung der Rotationstrommel in dem Gehäuse bereitet gewisse Schwierigkeiten, denn die Lagerung muss in der Lage sein, axiale wie radiale Dilatationen oder Kontraktionen des Materials der Trommel aufzunehmen, die auf thermische Belastung der Trommel durch Aufheizen oder Abkühlung zurückzuführen ist. Die Lagerung muss weiterhin in der Lage sein, auch mechanische Belastungen aufzunehmen, die wieder auf ein unregelmässiges Verteilen des behandelten Materials in der Trommel zurückzuführen sind und die sich dann mit Ausschlagen der Trommel beim Rotieren erkennbar machen.

Die Lagerung der Trommel wird gemäss der nicht vorpublizierten EP-A 158 051 auf befriedigende Weise mittels hydrostatischer Lager- bzw. Stützelemente in der radialen Richtung gelöst und in der axialen Richtung wird die Trommel mittels hydrodynamischer Lager geführt. Diese Arten von Lagerungen haben sich vollkommen bewährt, aber in machen Fällen sind sie zu aufwendig, wenn verglichen mit der von ihnen zu bewältigenden Aufgabe.

Es ist also Aufgabe dieser Erfindung, eine Lagerung für die Maschine der anfangs beschriebenen Art zu schaffen, die wesentlich einfacher und deshalb auch billiger ist, wobei aber die grundsätzlichen Aufgaben, die, wie oben geschildert, auf diese Lagerung gestellt sind, erfüllen kann.

Diese Aufgabe ist an der Maschine der anfangs beschriebenen Art dadurch erfüllt, dass die Lagerkränze ein die Rotationstrommel umfassendes Wälzlager aufweist, dessen Aussenring an dem Gehäuse befestigt ist, und zum Auffangen der eventuellen radialen Bewegungen der Rotationstrommel relativ zum Gehäuse infolge deren Unwucht und/oder einer Dilatation bzw. Kontraktion der Rotationstrommel infolge Temperaturänderungen während des Betriebes der Behandlungsmaschine, zwischen dem Innenring und der Aussenwand der Rotationstrommel ein mit dem Innenring und der Rotationstrommel mitrotierbares, elastisches System vorgesehen ist, wobei das System einen elastischen Ring aufweist, der zwischen der Aussenwand der Rotationstrommel und dem Innenring des Wälzlagers angeordnet ist und koaxial zu diesen mittels mit ihm verbundenen, regelmässig dem Umfang des Ringes entlang verteilter Stücke gehalten ist, die in den beiden Ringräumen beiderseits des elastischen Ringes abwechslungsweise angeordnet sind, so dass in Umfangsrichtung jeweils zwischen zwei in dem inneren Ringraum angeordneten Stücken ein Stück in dem äusseren Ringraum angeordnet ist und umgekehrt.

Im weiteren wird die Erfindung und ihre Vorteile anhand eines Zeichnungsblattes näher beschrieben und erklärt. In dem Zeichnungsblatt zeigen:

Figur 1 einen partiellen Längsschnitt durch eine Behandlungsmaschine, und

Figur 2 einen partiellen Querschnitt durch einen Lagerkranz, der in der Figur 1 mit 7 bezeichnet ist.

Eine Behandlungsmaschine enthält in einem Gehäuse 1 eine angeordnete Behandlungstrommel, deren Aussenwand mit 2 bezeichnet ist. Die Rotationstrommel hat an den beiden Stirnseiten je einen Deckel 5 bzw. 6. Die Rotationstrommel wird von einem Antriebsmotor 3 über ein Riemengetriebe 4 angetrieben.

Die Rotationstrommel ist in dem Gehäuse 1 mittels zwei axial voneinander distanzierter Lagerkränze 7 und 8 gelagert.

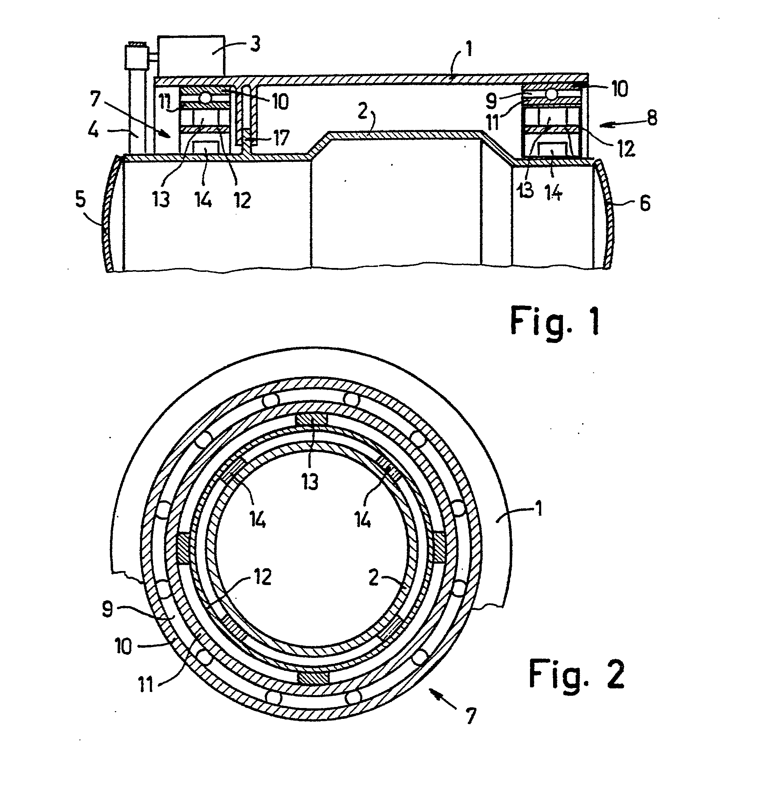

Wie es besonders gut in Figur 2 zu sehen ist, weist der Lagerkranz 7 ein Wälzlager 9 auf, dessen Aussenring 10 in dem Gehäuse 1 festsitzt. In dem Raum zwischen dem Innenring 11 des Wälzlagers und der Aussenwand 2 der Rotationstrommel ist ein elastischer Ring 12 angeordnet, der koaxial zu der Rotationstrommel und dem Wälzlager liegt. In dieser Position wird der elastische Ring mittels Stücken 13 und 14 gehalten, welche jeweils mit ihm und mit dem Innenring des Wälzlagers bzw. der Aussenwand der Rotationstrommel verbunden sind und so mit der Rotationstrommel und mit dem Innenring 11 des Wälzlagers 9 mitrotierbar sind und im Betrieb mitrotieren. Die Stücke 13 bzw. 14 sind jeweils in dem Ringraum zwischen dem elastischen Ring 12 und dem Innenring 11 des Wälzlagers bzw. in dem Zwischenraum zwischen dem elastischen Ring 12 und der Aussenwand 2 der Rotationstrommel abwechslungsweise in der Umfangsrichtung regelmässig verteilt angeordnet, und zwar so, dass jeweils zwischen zwei Stücken 14 in dem inneren Ringraum ein Stück 13 in dem äusseren Ringraum angeordnet ist. Auf diese Weise ist es möglich, dass bei beispielsweise thermischer Ausdehnung der Aussenwand 2 der Rotationstrommel diese Dehnung aufgefangen werden kann, indem sich der elastische Ring in radialer Richtung verformt. Auf diese elastische federnde Weise werden von diesem elastischen Ring auch eventuell vorkommende Ausschlagungen der Rotationstrommel wegen vorhandener Unwucht aufgefangen.

Der elastische Ring 12 kann unter Umständen einfach ein Abschnitt eines Stahlrohres sein, das sich durch entsprechende Elastizität auszeichnet.

In einem anderen Fall, kann der elastische Ring 12 eine Sandwich-Konstruktion sein, die aus einigen Metallagen besteht.

Als ein weiteres Beispiel eines elastischen Ringes 12 kann eine Konstruktion genannt werden, die aus einigen, aus dünnem Stahlblech bestehenden, aufgewundenen Metallagen besteht.

Diese drei Ausführungsbeispiele des elastischen Ringes 12 sind wegen ihrer Eindeutigkeit nicht mit separaten Figuren in dem Zeichnungsblatt gezeigt.

In axialer Richtung kann die Rotationstrommel mittels einer hydrodynamischen Lagerung gegenüber dem Gehäuse 1 geführt werden, welche Lagerung in der Zeichnung mit 17 bezeichnet ist. Die möglicherweise vorkommenden Dilatationen der Rotationstrommel, die sich in axialer Richtung zeigen würden, können durch vorgesehene Verschiebungsmöglichkeiten der Elemente des jeweiligen elastischen Systems in axialer Richtung hingenommen werden.

**Patentansprüche**

1. Behandlungsmaschine mit Rotationstrommel (2), die in einem Gehäuse (1) mit mindestens zwei axial voneinander distanzierten Lagerkränzen (7, 8) gelagert ist, dadurch gekennzeichnet, dass jeder Lagerkranz (7, 8) ein die Rotationstrommel (2) umfassendes Wälzlager aufweist, dessen Aussenring (10) an dem Gehäuse (1) befestigt ist, und zum Auffangen der eventuellen radialen Bewegungen der Rotationstrommel relativ zum Gehäuse (1) infolge deren Unwucht und/oder einer Dilatation bzw. Kontraktion der Rotationstrommel infolge Temperaturänderungen während des Betriebs der Behandlungsmaschine zwischen dem Innenring (11) des Lagers und der Aussenwand (2) der Rotationstrommel ein mit dem Innenring (11) und der Rotationstrommel (2) mitrotierbares, elastisches System (12, 13, 14 oder 15) vorgesehen ist, wobei das System einen elastischen Ring (12) aufweist, der zwischen der Aussenwand (2) der Rotationstrommel und dem Innenring (11) des Wälzlagers (9) angeordnet ist und koaxial zu diesem mittels mit ihm verbundener, regelmässig dem Umfang des Ringes (12) entlang verteilter Stücke (13 und 14) gehalten ist, die in den beiden Ringräumen beiderseits des elastischen Ringes (12) abwechlungsweise angeordnet sind, so dass in Umfangsrichtung jeweils zwischen zwei, in dem inneren Ringraum angeordneten Stücken (14), ein Stück (13) in dem äusseren Ringraum angeordnet ist, und umgekehrt.

2. Behandlungsmaschine nach Anspruch 1, dadurch gekennzeichnet, dass der elastische Ring (12) ein Abschnitt eines Stahlrohres ist.

3. Behandlungsmaschine nach Anspruch 1, dadurch gekennzeichnet, dass der elastische Ring (12) eine Sandwich-Konstruktion ist, die aus einigen Metallagen besteht.

4. Behandlungsmaschine nach Anspruch 1, dadurch gekennzeichnet, dass der elastische Ring (12) eine, aus einigen aus dünnem Stahlblech bestehende Metallagen gewundene Konstruktion ist.

**Claims**

1. A treatment machine with a rotary drum (2), which is mounted in a housing (1) with at least two bearing rings (7, 8) distanced axially from each other, characterised in that each bearing ring (7, 8) has a bearing surrounding the rotary drum (2), the outer ring (10) of which bearing is attached to the housing (1), and, in order to offset any radial movements of the rotary drum relative to the housing (1) as a result of its imbalance and/or of dilatation or contraction of the rotary drum as a result of temperature changes during the operation of the treatment machine, an elastic system (12, 13, 14) which can be rotated together with the inner ring (11) and the rotary drum (2) is provided between the inner ring (11) of the bearing and the outer wall (2) of the rotary drum, the system having an elastic ring (12) which is arranged between the outer wall (2) of the rotary drum and the inner ring (11) of the rolling bearing (9), and is held coaxial thereto by means of components (13 and 14) which are connected thereto and spaced regularly along the periphery of the ring (12), which components are arranged alternately in the two annular spaced on both sides of the elastic ring (12), so that a component (13) is arranged in the outer annular space in the circumferential direction, in each case between two components (14) arranged in the inner annular space, and vice versa.

2. A treatment machine according to claim 1, characterised in that the elastic ring (12) is a section of steel pipe.

3. A treatment machine according to claim 1, characterised in that the elastic ring (12) is a sandwich construction which consists of several metal layers.

4. A treatment machine according to claim 1, characterised in that the elastic ring (12) is a construction wound from several metal layers made of thin sheet steel.

**Revendications**

1. Machine de traitement comportant un tambour rotatif (2) qui est monté dans un bâti (1) au moyen d'au moins deux couronnes formant palier (7, 8) situées axialement à distance l'une de l'autre, caractérisée par le fait que chacune des couronnes formant palier (7, 8) présente un roulement entourant le tambour rotatif (2), dont la bague extérieure (10) est fixée au bâti (1) et que pour absorber les mouvements radiaux éventuels du tambour rotatif par rapport au bâti (1) en raison d'une contraction du tambour rotatif du fait des variations de température au cours du fonctionnement de la machine de traitement, il est prévu, entre la bague intérieure (11) du palier et la paroi extérieure du tambour rotatif, un système élastique (12, 13, 14 ou 15) tournant avec la bague intérieure (11) et le tambour rotatif (2), ce système présentant un anneau élastique (12) qui est disposé entre la paroi extérieure (2) du tambour rotatif et la bague intérieure (11) du roulement (9) et est maintenu coaxialement à celle-ci au moyen de pièces (13, 14) reliées à celui-ci et réparties régulièrement sur le pourtour de l'anneau (12), lesquelles sont disposées alternativement dans les deux espaces annulaires situés des deux côtés de l'anneau élastique (12) de telle façon que dans le sens périphérique, dans chaque cas, entre deux pièces (14) disposées dans l'espace annulaire intérieur, se trouve disposée une pièce (13) dans l'espace annulaire extérieur, et réciproquement.

2. Machine de traitement selon la revendication 1, caractérisé par le fait que l'anneau élastique (12) est un morceau de tube d'acier.

3. Machine de traitement selon la revendication 1, caractérisé par le fait que l'anneau élastique (12) est une structure sandwich qui est constituée par plusieurs couches métalliques.

4. Machine de traitement selon la revendication 1, caractérisé par le fait que l'anneau élastique (12) est une structure de couches métalliques enroulées, constituées par de la tôle d'acier mince.

Fig. 1

Fig. 2